# EUROPÄISCHE PATENTSCHRIFT

(11) **EP 1 171 258 B1**
(45) Veröffentlichungstag und Bekanntmachung des Hinweises auf die Patenterteilung: **02.01.2003**
(21) Anmeldenummer: 00917064.8
(22) Anmeldetag: 10.04.2000
(51) Int. Cl.: B23D 31/00, B23D 25/12

(54) **FLIEGENDE SCHERE**
FLYING SHEAR
CISAILLE VOLANTE

(30) Priorität: 16.04.1999 DE 19917389; 13.01.2000 DE 10001072
(43) Veröffentlichungstag der Anmeldung: 16.01.2002
(73) Patentinhaber: SMS Demag Aktiengesellschaft, 40237 Düsseldorf (DE)
(72) Erfinder: GRAFE, Horst, D-57271 Hilchenbach (DE); MERZ, Jürgen, D-57223 Kreuztal (DE); MÜNKER, Jochen, D-57223 Kreuztal (DE); NIELSEN, Duane, A., Knoxville, TN 37919 (US); BARRY, Michael, L., Knoxville, TN 37916 (US)
(74) Vertreter: Valentin, Ekkehard, Dipl.-Ing.
(86) Internationale Anmeldenummer: EP0003168
(87) Internationale Veröffentlichungsnummer: WO00062964

(56) Entgegenhaltungen:
- DE-A- 19 809 813
- GB-A- 2 203 677
- US-A- 5 653 022

## Beschreibung

Die Erfindung betrifft eine fliegende Schere mit mindestens einer, mit einem Messer ausgestatteten Trommel, deren Umfangsgeschwindigkeit mit der Vorschubgeschwindigkeit des Walzbandes synchronisierbar ist, sowie mit einem der Trommel gegenüberstehenden Amboß.

Derartige synchronisierten Scheren sind beispielsweise als Hochgeschwindigkeitsscheren zum Querteilen von Walzband aus der DE 196 37 862 A1 bekannt. Hier werden entweder zwei gegenüberstehende und gegeneinander anstellbare Trommeln benutzt, die beide mit Messern ausgestattet sind, es wird aber auch eine der Trommeln mit einem Amboß versehen, oder als Amboß genutzt.

Die Anstellwege sind so bemessen, daß die beiden Klingen einander gegenüberstehender Trommeln in geringer Distanz einander überlappen, oder die Scherkante eines Messer sich auf den Amboß der gegenüberliegenden Walze oder aber deren Umfang unter Druck auflegt. Es hat sich jedoch herausgestellt, daß bei derartigen Schervorgängen der Verschleiß der Klingen sowie ggf. verwendeter Amboßflächen unerwünscht hoch ist, und als die Herstellung verteuernd erweist es sich, daß zum exakten Auflegen der Messer auf einen Amboß oder zum definierten Schnitt mit zwei Messern die Herstellung der Schere innerhalb engster Toleranzen zu erfolgen hat, um einwandfreie Schneidleistungen zu gewährleisten.

Die GB 2 203 677 A offenbart bereits eine Schervorrichtung, die ein Messer und einen Amboß aufweist, die derartig zueinander justiert sind, daß das zu schneidende Band lediglich eingekerbt wird. Durch späteres Aufbringen von Zug auf das Band kommt es an den Einkerbungen zum Riß und damit zum Trennen des Bandes. Bei diesen Schervorrichtungen wird neben der Messertrommel eine Amboßtrommel benötigt, die aufwendig synchronisiert werden müssen. Hinzu kommt, daß bei der Berührung des Bandes mit der Amboßtrommel Schäden am Band entstehen können.

Die Erfindung geht von der Aufgabe aus, eine gattungsgemäße Schere zu finden, deren Verschleiß und Gestehungskosten minimiert sind, und die bei der Herstellung erweiterte Toleranzen ohne Beeinträchtigung der Schneidleistung zuläßt.

Gelöst wird die Aufgabe mit den Merkmalen des Patentanspruches 1. Diese erlauben es, durch nur teilweises Eindringen eines Messers oder Keiles in das Walzband dessen Querschnitt an der Schnittstelle definiert erheblich einzuschränken und die Trennung dann durch auf das Walzband ausgeübte Zugkräfte durchzuführen, wobei auf die Verwendung einer Amboßtrommel mit einer entsprechend aufwendigen Synchronisation verzichtet wird. Vorteilhafte, zweckmäßige und erfinderische weiterführende Merkmale sind den Unteransprüchen zu entnehmen.

Im Einzelnen sind die Merkmale der Erfindung anhand der Beschreibungen eines Ausführungsbeispieles in Verbindung mit einer dieses darstellenden Zeichnung erläutert.

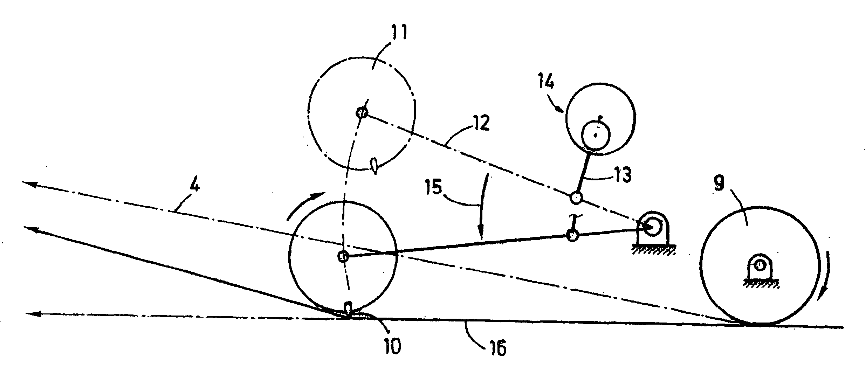

In der Figur ist eine, ein Messer bzw. Keil 10 tragende Messertrommel 11 dargestellt. Die Messertrommel 11 ist am Ende eines Hebelarms 12 angeordnet, welchem als Anstellvorrichtung ein über einen Lenker 13 kraftbetriebener Exzenter 14 zugeordnet ist.

Normalerweise steht bei Hochgeschwindigkeitsscheren die Messertrommel 11 so weit über dem Walzband 4, daß deren Messer 10 das Walzband 4 nicht erreicht. Zur Durchführung des Schnittes jedoch wird die, mit der Bandgeschwindigkeit entsprechender Umfangsgeschwindigkeit über mehrere Umdrehungen angetriebene, Messertrommel 11 von der Anstellvorrichtung spontan in Richtung auf das Walzband vorgeschoben, so daß das Messer 10 in das Walzband 4 eintritt und dieses bis auf eine Reststärke durchtrennt.

Bei langsamer laufendem Band besteht die Möglichkeit auf die Anstellvorrichtung zu verzichten, und die mit festem Abstand zum Walzband 4 angeordnete Messertrommel 11 für jedes in Wirkstellung bringen über annähemd eine Umdrehung der Messertrommel 11 auf eine der Bandgeschwindigkeit entsprechende Umfangsgeschwindigkeit zu beschleunigen.

Auf das in Richtung des Pfeiles laufende Walzband 4 wird nunmehr eine derartige Zugkraft ausgeübt, daß das Walzband 4 an der Trennungsstelle, die ja durch das Messer 10 stark geschwächt ist, zerreißt.

Damit wird die Trennung nicht als reiner Schnitt durchgeführt, sondern nur durch ein Eindringen des Messers 10 oder eines Keiles in das Material des Walzbandes 4 in einem Ausmaße, daß dieses an der Trennungsstelle wesentlich geschwächt ist. Die zur endgültigen Trennung erforderliche Zugkraft kann unterschiedlich aufgebracht werden. Zum Einen ist es möglich, diese Zugkraft auf das Walzband 4 selbst aufzubringen, es besteht aber auch die Möglichkeit, die Umfangsgeschwindigkeit der Messertrommel 11 etwas geringer oder etwas größer zu halten als die Vorschubgeschwindigkeit des Walzbandes 4, so daß die das Zerreißen des Walzbandes 4 bewirkende Zugkraft zwischen dem Messer 10 und dem Anfang bzw. oder dem Ende des Walzbandes 4 bewirkt wird. Es besteht jedoch auch die Möglichkeit, Geschwindigkeitsdifferenzen bzw. Zugkraftunterschiede so auszulegen, daß durch diese die Trennung bewirkt wird.

Im Beispiel wird das Walzband 4 von einem Haspel 9 abgezogen. Die mit einem Keil 10 ausgestattete Messerrolle 11 läuft am Ende des Hebelarmes 12 um. Zum Schnitt wird der Exzenter 14 betätigt und schwenkt über den Lenker 13 den Hebelarm 12 sowie die Messerrolle 11 in deren Wirkstellung 15.

In ihrer Wirkstellung 15 biegt die Messerrolle 11 das Walzband 4 nach unten zur Linie 16 durch, und der Keil 10 dringt hierbei, bewirkt durch das Auftreffen der Messerrolle auf die Masse des Walzbandes 4 sowie die beim Auslenken des Walzbandes bewirkten Kräfte, in das Walzband 4 ein. Die durch das Abziehen des Walzbandes 4 und/oder durch die Drehung der Messerrolle mit teilweise eingedrungenem Keil 10 bewirkten Längskräfte trennen hierbei das Walzband 4 auf.

Die Erfindung ist einer Anzahl von Varianten fähig. So können als Anstellvorrichtung an Hebelarme angreifende Hydraulikkolben ebenso vorgesehen werden, wie Hydraulikkolben, die an eine Gradführung angreifen. Auch Exzentervorrichtungen sind möglich, die über eine Lasche den Schwenkwinkel eines Hebelarms bestimmen, oder deren Exzenter direkt in eine Führung des Hebelarmes eingreift. In jedem Falle ergibt sich sowohl die angestrebte Verschleißminderung als auch der Verzicht einer Bearbeitung der Scherenteile innerhalb enger Toleranzen, so daß aufgabengemäß eine einfach aufgebaute und nur relativ geringem Verschleiß ausgesetzte Schere geschaffen wird.

## Patentansprüche

1. Fliegende Schere mit mindestens einer, mit einem Messer ausgestatteten Trommel, deren Umfangsgeschwindigkeit mit der Vorschubgeschwindigkeit des Walzbandes synchronisierbar ist, sowie mit einem der Trommel gegenüberstehenden Amboß,
**dadurch gekennzeichnet,**
**daß** als Amboß die Masse des Walzbandes (4), zurückdrängend beschleunigt durch die Messertrommel (11), sowie die Spannkraft des ausgelenkten Walzbandes (4) dient.

2. Schere nach Anspruch 1,
**dadurch gekennzeichnet,**
**daß** die Messertrommel (11) über eine Anstellvorrichtung in Wirkstellung bringbar ist in der zumindest das Messer (10) der Messertrommel (11) mit dem Walzband (4) in Schneidkontakt steht.

3. Verwendung einer Schere nach Anspruch 1 oder 2,
**dadurch gekennzeichnet,**
**daß** in der Wirkstellung der Messertrommel (11) der Querschnitt des Walzbandes (4) durch teilweises Eindringen des Messers (10) so eingeschränkt ist, daß ein Reißen des Walzbandes (4) an der Schwächungsstelle aufgrund von das Walzband (4) beanspruchenden Längskräften gesichert ist.

## Claims

1. Cantilevered cutter with at least one drum, which is equipped with a knife and the circumferential speed of which can be synchronised with the speed of advance of the rolled strip, and with an anvil disposed opposite the drum, **characterised in that** the mass of the rolled strip (4), forcibly accelerated back by the knife drum (11), and the tension force of the rolled strip (4) deflected away serve as anvil.

2. Cutter according to claim 1, **characterised in that** the knife drum (11) can be brought by way of an adjusting device into an operative setting in which at least the knife (10) of the knife drum (11) is disposed in cutting contact with the rolled strip (4).

3. Use of a cutter according to claim 1 or 2, **characterised in that** in the operative setting of the knife drum (11) the cross-section of the rolled strip (4) is so constructed that a tearing of the rolled strip (4) at the point of weakening is secured by reason of longitudinal forces loading the rolled strip (4).

## Revendications

1. Cisaille volante comportant au moins un tambour équipé d'un couteau, dont la vitesse périphérique peut être synchronisée avec la vitesse d'avance de la bande laminée, ainsi qu'une enclume située à l'opposé du tambour, **caractérisée en ce qu'**à titre d'enclume sert la masse de la bande de laminage (4), accélérée à force en retour par le tambour à couteau (11), ainsi que la force de tension de la bande laminée déviée (4).

2. Cisaille selon la revendication 1, **caractérisée en ce que** le tambour à couteau (11) peut être amené en position d'action via un dispositif d'approche, dans laquelle au moins le couteau (10) du tambour à couteau (11) est en contact de coupe avec la bande laminée (4).

3. Application d'une cisaille selon l'une ou l'autre des revendications 1 et 2, **caractérisée en ce que** dans la position d'action du tambour à couteau (11), la section transversale de la bande laminée (4) est restreinte par une pénétration partielle du couteau (10), de telle sorte qu'une rupture de la bande laminée (4) à l'emplacement d'affaiblissement est assurée par des forces longitudinales sollicitant la bande laminée (4).
